# EUROPÄISCHE PATENTSCHRIFT

(11) **EP 1 242 275 B1**
(45) Veröffentlichungstag und Bekanntmachung des Hinweises auf die Patenterteilung: **30.03.2005**
(21) Anmeldenummer: 01988679.5
(22) Anmeldetag: 10.10.2001
(51) Int. Cl.: B62B 5/00, B62B 5/06

(54) **VON HAND BEWEGBARES TRANSPORTGERÄT**
TRANSPORTING DEVICE THAT CAN BE MOVED BY HAND
DISPOSITIF DE TRANSPORT POUVANT ETRE MU MANUELLEMENT

(30) Priorität: 23.10.2000 DE 10052332
(43) Veröffentlichungstag der Anmeldung: 25.09.2002
(73) Patentinhaber: WANZL METALLWARENFABRIK GMBH, D-89336 Leipheim (DE)
(72) Erfinder: HÄMMERLE, Jürgen, 89312 Günzburg (DE)
(86) Internationale Anmeldenummer: PCT/DE2001/003888
(87) Internationale Veröffentlichungsnummer: WO 2002/034605

(56) Entgegenhaltungen:
- EP-A- 0 466 065
- DE-A- 4 435 437

## Beschreibung

Die Erfindung betrifft ein von Hand bewegbares Transportgerät, mit einer Abstelleinrichtung zum Abstellen von Ware, mit einem mit Rollen ausgestatteten Fahrgestell und mit einem ebenfalls am Fahrgestell angeordneten, durch eine Steuerungseinrichtung ansteuerbaren, elektromotorisch angetriebenen Antriebsrad, das zum Antreiben des Transportgerätes bestimmt ist, wobei das Transportgerät eine nach oben verschwenkbare Leiter aufweist, die sich in Gebrauchslage am Boden abstützt und in Nichtgebrauchslage vom Boden abgehoben ist und wobei eine Schiebeeinrichtung vorgesehen ist, die eine mit der Steuerungseinrichtung verbundene Messeinrichtung aufweist, welche imstande ist, eine auf die Schiebeeinrichtung einwirkende, von Hand aufgebrachte Kraft zu messen, um dadurch ein Ansteuern des Antriebsrades durch die Steuerungseinrichtung zu bewirken.

Transportgeräte dieser Art sind als sogenannte Kommissionierwagen für den Einsatz in Warenlagern vorgeschlagen worden. Dabei soll die an den Transportgeräten befindliche Leiter dazu dienen, Ware aus höher gelegenen Regalfächern zu erreichen, um sie dort abstellen oder den Regalfächern entnehmen zu können (siehe z.B. DE-A-4435437). Da die Transportgeräte auch schwer beladen werden können, sollen diese zusätzlich durch ein elektromotorisches Antriebsrad antreibbar sein. Es sind deshalb besondere Anforderungen an die Sicherheit solcher Transportgeräte zu stellen.

Um bei einem gattungsgemäßen Transportgerät diese Sicherheit zu erreichen wird vorgeschlagen, die Leiter mit einer im bestehenden Stromkreis integrierten Schalteinrichtung zu verbinden, die dazu bestimmt ist, das Antreiben des Antriebsrades zu verhindern, wenn sich die Leiter in der Gebrauchslage befindet und umgekehrt das Antreiben des Antriebsrades zu ermöglichen, wenn die Leiter ihre Nichtgebrauchslage eingenommen hat.

Es ist somit nicht möglich, das Transportgerät über das Antriebsrad anzutreiben, wenn sich die Leiter in der Gebrauchslage befindet oder wenn eine Person auf der Leiter steht. Gleiches gilt auch, wenn eine Person auf die Leiter steigt und sich an der Schiebeeinrichtung festhält. Selbst wenn dabei die an der Schiebeeinrichtung befindliche Messeinrichtung die von Hand aufgebrachten Kräfte misst und je nach Art des Stromkreises entsprechende Signale oder Befehle an die Steuerungseinrichtung weiterleitet, wird das Antriebsrad nicht angetrieben, weil die Stromzufuhr zum Antriebsrad durch die Schalteinrichtung unterbrochen ist. Die vorgeschlagenen Maßnahmen lassen somit ein sicheres Transportgerät entstehen.

Die Erfindung wird anhand eines Ausführungsbeispieles näher beschrieben. Es zeigt
- Fig. 1: ein Transportgerät mit in Gebrauchslage befindlicher Leiter;
- Fig. 2: das gleiche Transportgerät mit in Nichtgebrauchslage angeordneter Leiter sowie
- Fig. 3: einen Schaltplan einfachster Darstellung.

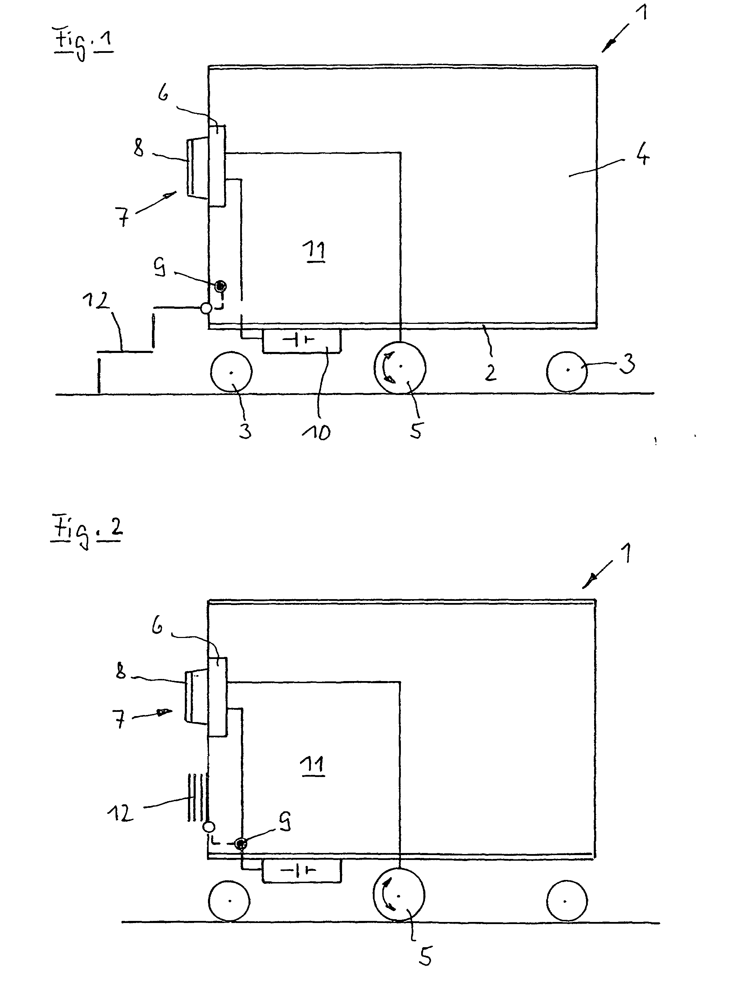

Das in Fig. 1 dargestellte Transportgerät 1 weist ein mit Rollen 3 ausgestattetes Fahrgestell 2 auf, das eine Abstelleinrichtung 4 zum Abstellen von Ware trägt. Am Fahrgestell 2 ist ferner ein mit dem Fußboden in Kontakt stehendes, elektromotorisch angetriebenes Antriebsrad 5 angeordnet, das zum Antreiben des Transportgerätes 1 bestimmt ist. Das Transportgerät 1 ist mit einer Steuerungseinrichtung 6 ausgestattet, mit der sich auf elektrischem Wege das Antriebsrad 5 ansteuern lässt. Mit der Steuerungseinrichtung 6 elektrisch geschaltet ist auch eine Schiebeeinrichtung 7, mit der sich das Transportgerät 1 von Hand schieben und ziehen lässt. An der Schiebeeinrichtung 7 ist eine Messeinrichtung 8 (Sensorik) vorgesehen, die imstande ist, eine auf die Schiebeeinrichtung 7 einwirkende, beim Schieben oder Ziehen von Hand aufgebrachte Kraft zu messen. um dadurch in bekannter Weise ein Ansteuern des Antriebsrades 5 durch die Steuereinrichtung 6 zu bewirken. Das Antriebsrad 5 wirkt somit zumindest unterstützend beim Schieben und Ziehen des Transportgerätes 1. An einer Schmalseite des Transportgerätes I, an der sich üblicherweise auch die Schiebeeinrichtung 7 befindet, ist eine Leiter 12 verschwenkbar so befestigt, dass diese sich aus einer Gebrauchslage, in der sie sich am Fußboden abstützt, nach oben in eine Nichtgebrauchslage verschwenken lässt, in der die Leiter 12 vom Boden abgehoben ist. In den zwischen dem Antriebsrad 5, einer Stromquelle 10 (Batterie), der Steuerungseinrichtung 6, der Schiebeeinrichtung 7 und der Messeinrichtung 8 bestehenden Stromkreis 11 ist eine Schalteinrichtung 9 eingebunden, die auf die Schwenkbewegung der Leiter 12 reagiert. Die gewöhnlich mechanisch gestaltete Verbindung der Schalteinrichtung 9 mit der Leiter 12 ist, wie aus der Zeichnung ersichtlich, so gewählt, dass der Stromkreis 11 dann unterbrochen ist, wenn sich die Leiter 12 in der Gebrauchslage befindet. Dadurch kann das Antriebsrad 5 nicht angesteuert werden, so dass in diesem Zustand das Antriebsrad 5 auch nicht antreibend wirken kann. Eine von Hand auf die Schiebeeinrichtung 7 einwirkende Kraft ist in diesem Falle ohne Einfluss auf das Antriebsrad 5.

Fig. 2 zeigt das in Fig. 1 dargestellte und beschriebene Transportgerät 1 mit der in Nichtgebrauchslage befindlichen Leiter 12. Die Leiter 12 ist vom Boden abgehoben. Die Verbindung zwischen der Leiter 12 und der Schalteinrichtung 9 ist so gewählt, dass der in Fig. 1 beschriebene Stromkreis 11 geschlossen ist. Wirkt eine von Hand auf die Schiebeeinrichtung 7 einwirkende Kraft, leitet die Messeinrichtung 8 entsprechende Signale oder Befehle an die Steuerungseinrichtung 6 weiter, so dass diese das Antriebsrad 5 entsprechend beeinflussen kann.

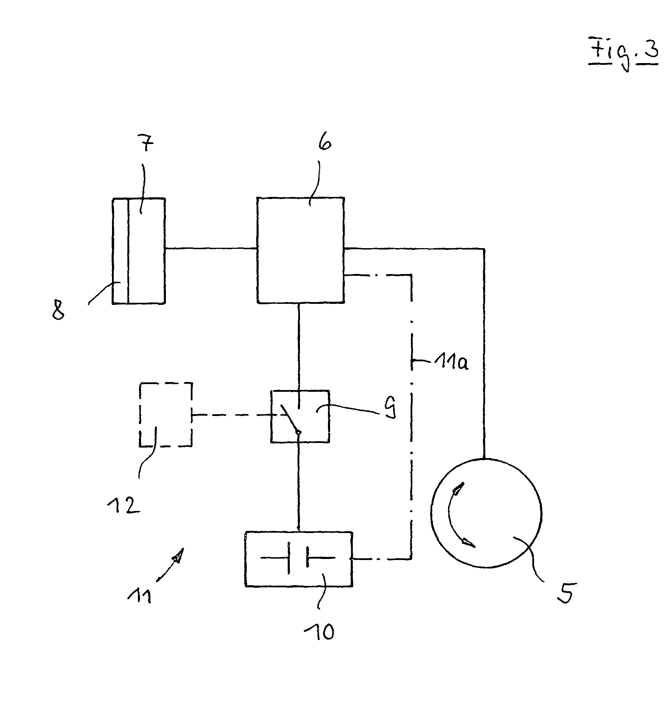

Fig. 3 zeigt einen Schaltplan, der die elektrische Verbindung zwischen den in Fig. 1 und 2 beschriebenen relevanten Teilen aufzeigt. Anhand der eingetragenen Positionszahlen lassen sich diese Teile bestimmen, wobei, strichpunktiert gezeichnet, wahlweise als weiterer Stromkreis ein Steuerstromkreis 11 a eingezeichnet ist, der die Steuerungseinrichtung 6 zusätzlich mit der Stromquelle 10 verbindet. Über diesen Steuerstromkreis 11a kann mit Hilfe der Steuerungseinrichtung 6 durch entsprechende Ansteuerung erreicht werden, dass trotz unterbrochenem Stromkreis 11 das Antriebsrad 5 mit Hilfe einer dem Antriebsrad 5 zugeordneten Bremseinrichtung in einer gebremsten Position gehalten wird.

Die Erfindung beschränkt sich nicht auf die eben beschriebenen Ausführungsbeispiele. Transportgeräte 1 der hier bevorzugt beschriebenen Art können anstelle der für Ware bestimmten Abstelleinrichtung 4 durchaus andere, dem entsprechenden Anwendungszweck dienende Einrichtungen aufweisen. Ebenso kann anstelle nur eines Antriebsrades 5 auch ein weiteres Antriebsrad 5 vorgesehen sein. Schließlich kann die Schiebeeinrichtung 7 am Transportgerät 1 so angebracht sein, dass diese von der Leiter 12 aus nicht erreichbar ist.

## Patentansprüche

1. Von Hand bewegbares Transportgerät (1) mit einer Abstelleinrichtung (4) zum Abstellen von Ware, mit einem mit Rollen (3) ausgestatteten Fahrgestell (2) und mit einem ebenfalls am Fahrgestell (2) angeordneten, durch eine Steuereinrichtung (6) ansteuerbaren, elektromotorisch angetriebenen Antriebsrad (5), das zum Antreiben des Transportgerätes (1) bestimmt ist, wobei das Transportgerät ( 1 ) eine nach oben verschwenkbare Leiter (12) aufweist, die sich in Gebrauchslage am Boden abstützt und in Nichtgebrauchslage vom Boden abgehoben ist und wobei eine Schiebeeinrichtung (7) vorgesehen ist, die eine mit der Steuerungseinrichtung (6) verbundene Messeinrichtung (8) aufweist, welche imstande ist, eine auf die Schiebeeinrichtung (7) einwirkende, von Hand aufgebrachte Kraft zu messen, um dadurch ein Ansteuern des Antriebrades (5) durch die Steuerungseinrichtung (6) zu bewirken, und wobei die Leiter (12) mit einer im bestehenden Stromkreis (11) integrierten Schalteinrichtung (9) verbunden ist, die dazu bestimmt ist, das Antreiben des Antriebsrades (5) zu verhindern, wenn sich die Leiter (12) in der Gebrauchslage befindet und umgekehrt das Antreiben des Antriebsrades (5) zu ermöglichen, wenn die Leiter (12) ihre Nichtgebrauchslage eingenommen hat.

2. Transportgerät nach Anspruch 1, wobei die Schalteinrichtung (9) auf die Schwenkbewegung der Leiter (12) reagiert.

3. Transportgerät nach Anspruch 1 oder 2, wobei bei unterbrochenem Stromkreis (11) eine von Hand auf die Schiebeeinrichtung (7) einwirkende Kraft ohne Einfluss auf das Antriebsrad (5) ist.

4. Transportgerät nach einem der Ansprüche 1 bis 3, wobei als weiterer Stromkreis ein Steuerstromkreis (11a) vorgesehen ist, durch den mit Hilfe der Steuerungseinrichtung (6) ein Ansteuern des Antriebsrades (5) derart erfolgt, dass dieses in einer gebremsten Position gehalten wird.

5. Transportgerät nach einem der Ansprüche 1 bis 4, wobei zwei Antriebsräder (5) vorgesehen sind.

6. Transportgerät nach einem der Ansprüche 1 bis 5, wobei die Schiebeeinrichtung (7) so angeordnet ist, dass diese von der Leiter (12) aus erreichbar ist.

7. Transportgerät nach einem der Ansprüche 1 bis 5, wobei die Schiebeeinrichtung (7) so angeordnet ist, dass diese von der Leiter (12) aus nicht erreichbar ist.

## Claims

1. A manually movable transport device (1), comprising a storing arrangement (4) for storing merchandise, a chassis (2) equipped with rollers (3) and a drive wheel (5), driven by electromotive means, also arranged on the chassis (2) and operable by means of a control device (6), which is intended for driving the transport device (1), wherein the transport device (1) has an upwardly swingable ladder (12) which is supported on the ground in the in-use position and is lifted from the ground in the out-of-use position, and wherein a pushing device (7) is provided which has a measuring device (8) connected to the control device (6), which is able to measure a manually applied force acting on the pushing device (7), in order thereby to effect control of the drive wheel (5) by means of the control device (6), and wherein the ladder (12) is connected to a switching device (9) integrated within the existing electric circuit (11), which is intended to prevent the drive wheel (5) from being driven when the ladder (12) is in the in-use position and, conversely, to enable the drive wheel (5) to be driven when the ladder (12) has adopted its out-of-use position.

2. A transport device according to Claim 1, wherein the switching device (9) reacts to the swinging movement of the ladder (12).

3. A transport device according to Claim 1 or 2, wherein a force acting manually on the pushing device (7) has no influence on the drive wheel (5) when the electric circuit (11) is broken.

4. A transport device according to one of Claims 1 to 3, wherein a control circuit (11a) is provided as a further electric circuit, by means of which, with the aid of the control device (6), control of the drive wheel (5) is effected such that the said drive wheel is held in a braked position.

5. A transport device according to one of Claims 1 to 4, wherein two drive wheels (5) are provided.

6. A transport device according to one of Claims 1 to 5, wherein the pushing device (7) is arranged in such a way that it is reachable from the ladder (12).

7. A transport device according to one of Claims 1 to 5, wherein the pushing device (7) is arranged in such a way that it is not reachable from the ladder (12).

## Revendications

1. Appareil de transport (1) pouvant être mû manuellement, avec un équipement récepteur (4) pour recevoir des marchandises, avec un châssis (2) équipé de roulettes (3), et avec une roue motrice (5) également disposée sur le châssis (2), destinée à entraîner l'appareil de transport (1), entraînée par un moteur électrique et pouvant être asservie par un équipement de commande (6), l'appareil de transport (1) présentant un marchepied (12) pouvant être pivoté vers le haut, qui s'appuie en position d'utilisation sur le sol et qui est relevé à l'écart du sol en position de non-utilisation, et un équipement de poussée (7) étant prévu, qui présente un équipement de mesure (8) relié à l'équipement de commande (6) et capable de mesurer une force exercée à la main sur l'équipement de poussée (7), pour produire ainsi un asservissement de la roue motrice (5) par l'équipement de commande (6), et le marchepied (12) étant relié à un équipement de commutation (9), intégré dans le circuit électrique existant (11) et destiné à empêcher l'entraînement de la roue motrice (5) lorsque le marchepied (12) se trouve dans la position d'utilisation et, à l'inverse, à permettre l'entraînement de la roue motrice (5) lorsque le marchepied (12) a pris sa position de non-utilisation.

2. Appareil de transport selon la revendication 1, dans lequel l'équipement de commutation (9) réagit au mouvement de pivotement du marchepied (12).

3. Appareil de transport selon la revendication 1 ou 2, dans lequel, lorsque le circuit électrique (11) est interrompu, une force exercée à la main sur l'équipement de poussée (7) est sans effet sur la roue motrice (5).

4. Appareil de transport selon l'une des revendications 1 à 3, dans lequel il est prévu comme circuit électrique supplémentaire un circuit de courant de commande (11a) par lequel, à l'aide de l'équipement de commande (6), la roue motrice (5) est asservie de telle sorte qu'elle est maintenue dans une position freinée.

5. Appareil de transport selon l'une des revendications 1 à 4, dans lequel il est prévu deux roues motrices (5).

6. Appareil de transport selon l'une des revendications 1 à 5, dans lequel l'équipement de poussée (7) est disposé de telle sorte qu'il peut être atteint depuis le marchepied (12).

7. Appareil de transport selon l'une des revendications 1 à 5, dans lequel l'équipement de poussée (7) est disposé de telle sorte qu'il ne peut pas être atteint depuis le marchepied (12).
